# EUROPÄISCHE PATENTANMELDUNG

(11) **EP 4 653 084 A1**
(43) Veröffentlichungstag der Anmeldung: **26.11.2025**
(21) Anmeldenummer: 24177859.6
(22) Anmeldetag: 24.05.2024
(51) Int. Cl.: B01J 20/32, C02F 1/28

(54) **ADSORBENS ZUR BINDUNG VON POLYFLUORIERTEN ORGANISCHEN VERBINDUNGEN**

(71) Anmelder: DTNW Deutsches Textilforschungszentrum Nord-West gemeinnützige GmbH, 47798 Krefeld (DE)
(72) Erfinder: Bruzzano, Stefano, 47051 Duisburg (DE); Mayer-Gall, Thomas, 47475 Kamp-Lintfort (DE); Salma, Alaa, 47226 Duisburg (DE); Gutmann, Jochen Stefan, 47803 Krefeld (DE)
(74) Vertreter: Schneiders & Behrendt Bochum

(57) **Zusammenfassung**

Die Erfindung betrifft Adsorbens zur Bindung per- und polyfluorierter organischer Verbindungen auf einem textilen Trägermaterial, das eine Ausrüstung aus einem hydroxy-modifizierten Ammoniumsalz aufweist, dadurch gekennzeichnet, dass das Trägermaterial weiterhin mit einem alkoxy-modifizierten Melamin oder eine Polycarbonsäure ausgerüstet ist, wobei die Ausrüstung thermisch fixiert ist. Weiterhin betrifft die Erfindung die Verwendung dieses Adsorbens zur Bindung von per- und polyfluorinierten organischen Verbindungen aus wässrigen Medien, insbesondere Abwässern.

## Beschreibung

Die Erfindung betrifft ein Adsorbens zur Bindung polyfluorierter organischer Verbindungen auf einem Trägermaterial, dass eine Ausrüstung aus einem hydroxy-modifizierten Ammoniumsalz aufweist.

Per- und polyfluorierte organische Verbindungen, zu denen insbesondere auch die perfluorierten Tenside (PFTs) und perfluorierten Carbonsäuren (PFAs) und Sulfonäuren (PFSs) gehören, wurden erstmals in den siebziger Jahren in der Umwelt nachgewiesen. Heute sind sie weltweit in nahezu allen Gewässern, in der Atmosphäre, im Grundwasser sowie im Gewebe und Blut von Menschen und Tieren nachweisbar. Per- und polyfluorierte organische Verbindungen sind in der Umwelt dauerhaft und zersetzungsresistent.

Perfluoroktansäure (PFOA) und Perfluoroktansulfonat (PFOS) werden weltweit am häufigsten verwandt. Das REACH-Programm der Europäischen Union beschränkt die Herstellung und Verwendung von PFOS-verwandten Verbindungen. Außerdem wurde PFOS als persistenter organischer Schadstoff in die Stockholmer Konventionslisten aufgenommen und die Aufnahme von PFOA empfohlen. Die Umweltschutzbehörde der Vereinigten Staaten hat für PFOA und PFOS einen empfohlenen Trinkwasserstandard von 70 ng/l für die maximale Konzentration festgelegt. Der Verkauf von PFOS ist seit 2020 verboten.

In der DE 10 2020 122 580 A1 ist ein Adsorbersystem auf Basis kationischer amingruppenhaltiger Polyelektrolyte für PFTs beschrieben. Die WO 2013/050 139 A1 und WO 2014/161 973 A1 beschreiben ein Adsorbens und ein Verfahren zur Entfernung von fluorierten organischen Verbindungen aus damit kontaminierten Flüssigkeiten. Die absorbierten Schadstoffe werden mithilfe eines zweiten Adsorbens aus der Flüssigkeit ausgefällt.

Insgesamt stellen diese in Grund- und Abwasser enthaltenen Schadstoffe ein erhebliches Problem dar. Es besteht ein Bedarf an Adsorbern, mit denen diese Schadstoffe aus wässriger Umgebung zuverlässig entfernt werden können. Aufgabe der Erfindung ist damit die Bereitstellung eines Adsorbens, mit dem diese Schadstoffe aus wässriger Umgebung mit einem hohen Wirkungsgrad entfernt werden können.

Entsprechend betrifft die Erfindung ein Adsorbens der eingangs genannten Art, bei denen das Trägermaterial weiterhin mit einem hydroxy-modifizierten Melamin oder einer Polycarbonsäure ausgerüstet ist, wobei die Ausrüstung thermisch fixiert ist.

Bei den polyfluorierten organischen Verbindungen handelt es sich insbesondere um perfluorierte und polyfluorierte Carbonsäuren und Sulfonsäuren. Derartige Verbindungen werden vielfach in der Textilindustrie, der Papierindustrie, in Feuerlöschmitteln und in der Galvanik eingesetzt, etwa als Tenside und zur Imprägnierung, und sind Zusatzstoffe in zahlreichen Produkten. Aufgrund ihrer Dauerhaftigkeit reichern sie sich in der Umwelt, etwa auf Ackerflächen, die mit Klärschlamm beaufschlagt werden, und im Grundwasser an und gelangen damit ins Trinkwasser und in Nahrungsmittel.

Das erfindungsgemäße Adsorbens weist zum einen ein Trägermaterial auf, insbesondere ein textiles Trägermaterial. Dabei handelt es sich beispielsweise um ein textiles Flächengebilde, etwa aus Baumwolle, Wolle oder Viskose. Synthetische Textilmaterialien können ebenfalls eingesetzt werden.

Zum anderen ist das Trägermaterial mit dem eigentlichen Bindematerial ausgerüstet. Dies besteht aus zwei Komponenten, die auf dem Trägermaterial fixiert sind. Beide Komponenten sind für die Bindung der polyfluorierten organischen Verbindungen essenziell.

Bei der ersten Komponente handelt es sich um ein hydroxy-modifiziertes Ammoniumsalz, das vorzugsweise zwei Hydroxyethylgruppen aufweist. Die Hydroxyethylgruppen können einfach oder mehrfach ethoxyliert sein. Das Ammoniumssalz weist ferner vorzugsweise eine Alkylgruppe, insbesondere eine Methylgruppe auf, sowie einen Fettalkylrest oder einen Fettalkoxypropylrest. Als Anionen kommen übliche infrage, beispielsweise Chlorid, Sulfat, Nitrat oder Sulfonat. Bevorzugte Ammoniumsalze entsprechen den Formeln I und II 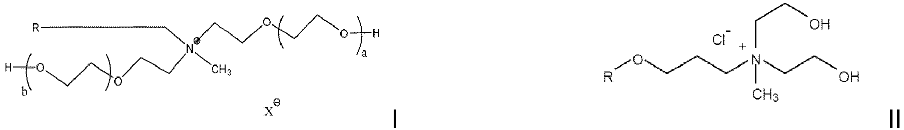 worin a und b unabhängig voneinander 1 bis 8 bedeuten und R eine Alkylgruppe mit bis zu 18 C-Atomen ist und x⁻ ein übliches Anion ist.

Die zweite Komponente ist ein alkoxy-modifiziertes Melamin, das bis zu drei Alkoxygruppen aufweisen kann. Bevorzugt ist ein Trimethoxymelamin. Alternativ ist die zweite Komponente eine Polycarbonsäure mit 3 bis 6 Carboxylgruppen an einem aliphatischen oder aromatischen Grundgerüst. Geeignet sind beispielsweise 1,2,3-Propantricarbonsäure, 1,2,3,4-Butantetracarbonsäure, aber auch Zitronensäure und mehrfach caboxyliertes Benzol. Besonders bevorzugt sind Verbindungen der nachstehenden Formeln III und IV. 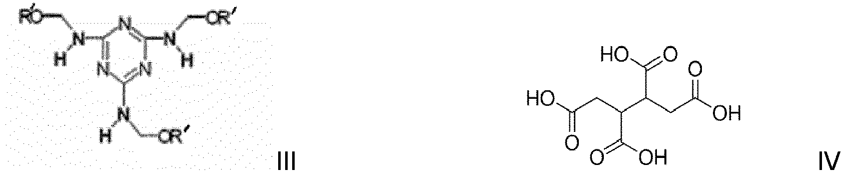 worin R' eine Alkylgruppe mit bis zu 6 C-Atomen ist.

Das Ammoniumssalz einerseits und das alkoxy-modifizierte Melamin oder die Polycarbonsäure andererseits werden zweckmäßigerweise in einem Molverhältnis von 5:1 bis 1:1 auf das Trägermaterial aufgebracht, vorzugsweise in einem Molverhältnis von etwa 2:1. Das so getränkte Trägermaterial wird nach dem Trocknen zur Fixierung der Ausrüstung einer thermischen Behandlung unterzogen. Dazu wird das so ausgerüstete Trägermaterial über einen Zeitraum von 10 bis 30 Minuten auf eine Temperatur von 100 bis 180° C, vorzugsweise 120 bis 160° C erhitzt. Nicht fixiertes Material wird anschließend ausgewaschen.

Das erfindungsgemäße Adsorbens hat sich als sehr geeignet erwiesen, insbesondere PFAs und PFSs aus Abwässern und Grundwasser/Trinkwasser zu binden. Es wurden Adsorptionsgrade von mehr als 90 % erzielt.

Die Erfindung wird durch die nachfolgenden Beispiele näher erläutert. Darin wurden die folgenden in Tab. 1 genannten Verbindungen eingesetzt.

**Tab. 1**

| **Chemikalien** | **Hersteller** | **Struktur** |
|---|---|---|
| REWOQUAT CPEM | EVONIK | 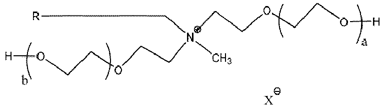 |
| Tomamine Q-14-2 (PG) | EVONIK | 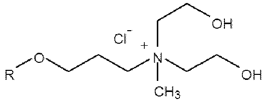 |
| MAPRENAL MF 920 | INEOS | 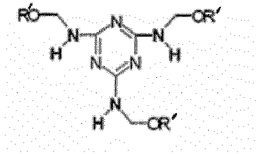 |
| 1,2,3,4-Butantetracarboxylicacid | abcr/SA | 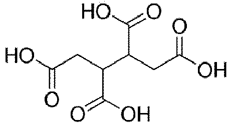 |

### Beispiel 1

Ein Baumwollstoff (170 g/cm²) wurde nach Maßgabe von Tab. 2 mit Ammoniumssalz und Melanin/Polycarbonsäure imprägniert. Nach dem Trocknen und der Fixierung bei 160° C über 15 Minuten ergaben sich die in Tab. 2 angegebenen Beladungen in Prozent des ausgerüsteten Textilmaterials.

### Beispiel 2

Abschnitte (Tab. 3) der gemäß Beispiel 1 ausgerüsteten Textilmaterialien wurden in 10 ml Wasser mit 1000 ng/l Perfluoroktancarbonsäure eingeweicht und 24 h geschüttelt. Anschließend wurde die Adsorption durch das Textilmaterial bestimmt. Es ergaben sich die aus Diagramm 1 ersichtlichen Werte. Blank Co bezeichnet eine Blindprobe, in der das Textilmaterial nicht ausgerüstet war.

**Tab. 2**

| | **Probenkennzeichnung** | **Molverhältnis** | **Auflage160°C fixiert [%]** |
|---|---|---|---|
| M1 | REWO/Maprenal | 1:0,5 | 33,7 |
| M2 | Toma/Maprenal | 1:0,5 | 42,8 |
| M3 | REWO/Btca | 1:0,5 | 34,4 |
| M4 | Toma/Btca | 1:0,45 | 28,2 |

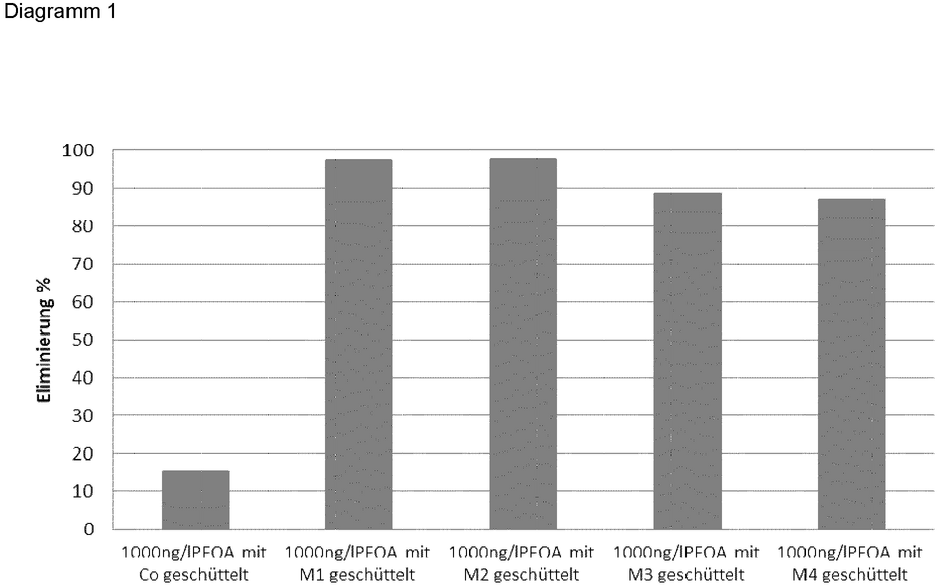

### Beispiel 3

Entsprechend Beispiel 2 wurde eine Probe mit 1000 ng/l Perfluorooktansulfonsäure behandelt. Die Daten sind in Tab. 3 angegeben, die Absorptionswerte in Diagramm 2.

**Tab. 3**

| **Name** | **Textilmenge** |
|---|---|
| Blank Co | 26,1 mg |
| M1 | 30,6 mg |
| M2 | 35,2 mg |
| M3 | 33,6 mg |
| M4 | 33,1 mg |

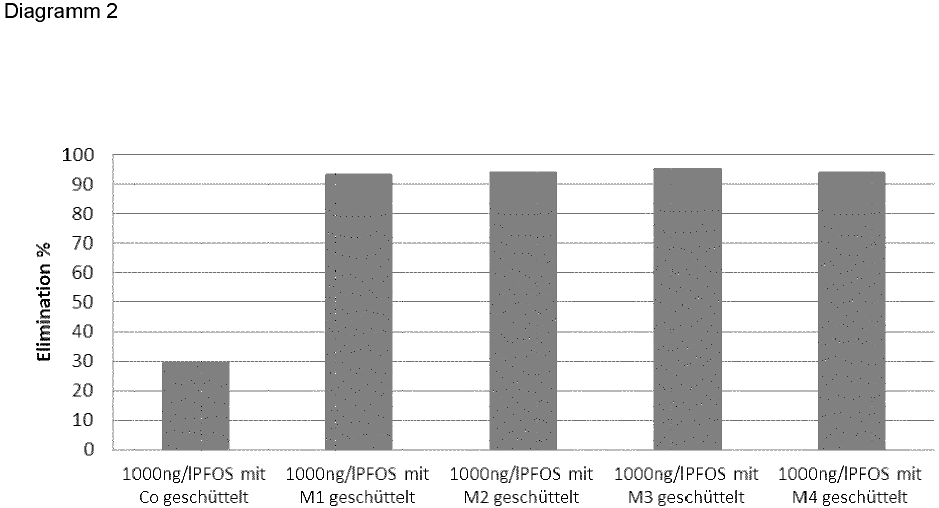

Perfluoroktancarbonsäure und Perfluorooktansulfonsäure sind sehr häufig verwandte PFTs, die regelmäßig in die Umwelt gelangen und sich in Abwässern, im Grundwasser, inzwischen auch im Trinkwasser und in Nahrungsmitteln finden. Die Adsorptionsraten von mehr als 90 % stellen eine erhebliche Verbesserung gegenüber herkömmlichen Verfahren dar.

### Beispiel 4

Entsprechend Beispiel 2 wurde eine Probe aus Beispiel 1 mit 517 ng/l Perfluorobutansäure behandelt. Die Daten sind in Tab. 4 angegeben, die Absorptionswerte in Diagramm 3.

**Tab. 4**

| **Name** | **Textilmenge** |
|---|---|
| Blank Co | 26,1 mg |
| M1 | 31,0 mg |
| M2 | 35,1 mg |
| M3 | 33,6 mg |
| M4 | 33,2 mg |

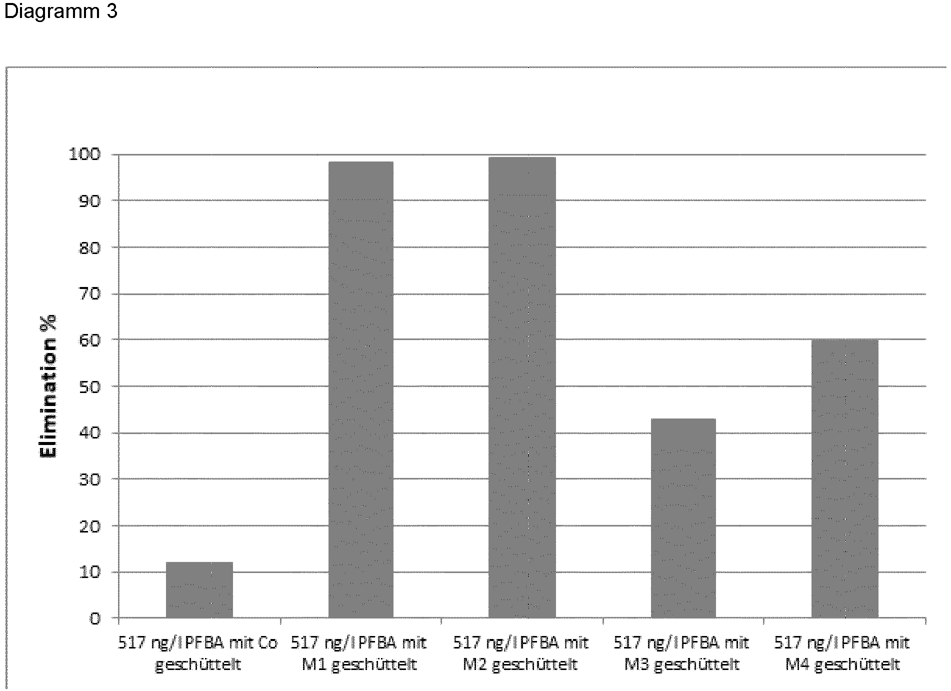

### Beispiel 5

Entsprechend Beispiel 2 wurde eine Probe mit 628 ng/l Perfluorobutansulfonsäure behandelt. Die Daten sind in Tab. 5 angegeben, die Absorptionswerte in Diagramm 4.

**Tab. 5**

| **Name** | **Textilmenge** |
|---|---|
| Blank Co | 26,1 mg |
| M1 | 30,5 mg |
| M2 | 35,1 mg |
| M3 | 33,5 mg |
| M4 | 33,2 mg |

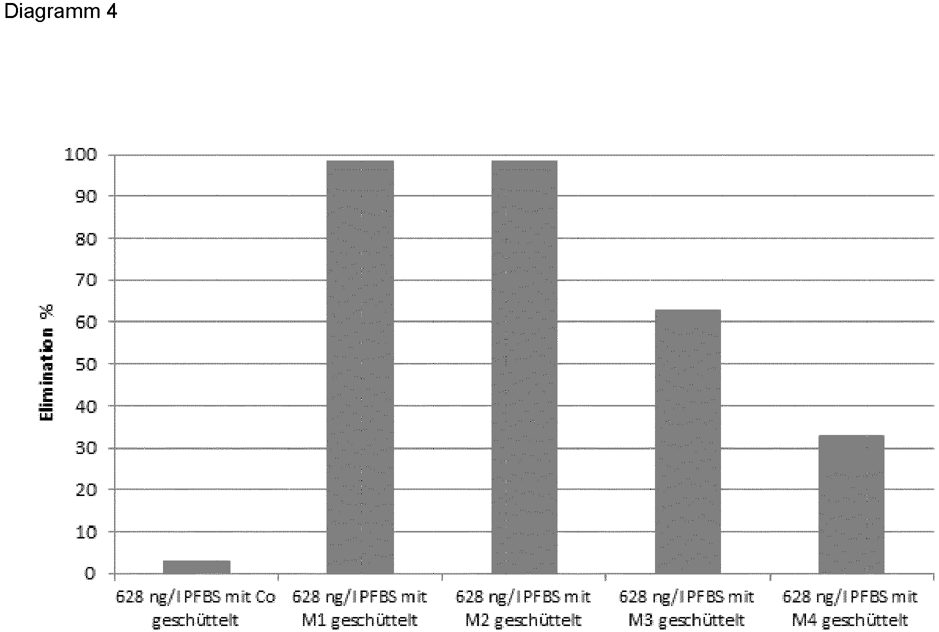

Diagramm 3 und 4 zeigen das erhebliche Potenzial der Kombinationen M1/M2 für die Adsorption von Perfluorobutansäure und Perfluorobutansulfonsäure.

## Patentansprüche

1. Adsorbens zur Bindung polyfluorierter organischer Verbindungen auf einem textilen Trägermaterial, das eine Ausrüstung aus einem hydroxy-modifizierten Ammoniumsalz aufweist, **dadurch gekennzeichnet, dass** das Trägermaterial weiterhin mit einem alkoxy-modifizierten Melamin oder eine Polycarbonsäure ausgerüstet ist, wobei die Ausrüstung thermisch fixiert ist.

2. Adsorbens nach Anspruch 1, **dadurch gekennzeichnet, dass** das Ammoniumsalz zwei Hydroxyethylgruppen aufweist, die mehrfach ethoxyliert sein können.

3. Adsorbens nach Anspruch 2, **dadurch gekennzeichnet, dass** das Ammoniumsalz eine Alkylgruppe, insbesondere eine Methylgruppe aufweist.

4. Adsorbens nach einem der vorstehenden Ansprüche, **dadurch gekennzeichnet, dass** das Ammoniumsalz eine der nachstehenden Formeln I oder II aufweist: 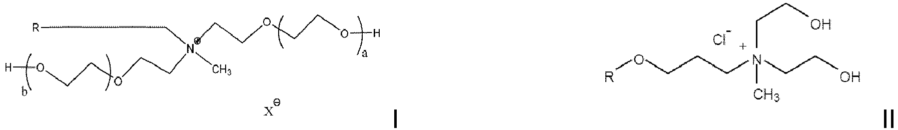 worin a und b unabhängig voneinander 1 bis 8 bedeuten, R eine Fettalkylgruppe mit bis zu 18 C-Atomen ist und x⁻ ein übliches Anion ist.

5. Adsorbens nach einem der vorstehenden Ansprüche, **dadurch gekennzeichnet, dass** das alkoxy-modifizierte Melamin der Formel III entspricht; 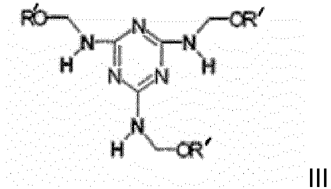 worin R' ein Alkylrest mit 1 bis 6 C-Atomen ist.

6. Adsorbens nach einem der Ansprüche 1 bis 4, **dadurch gekennzeichnet, dass** die Polycarbonsäure 1,2,3-Propantricarbonsäure oder 1,2,3,4-Butantetracarbonsäure ist.

7. Adsorbens nach einem der vorstehenden Ansprüche, **dadurch gekennzeichnet, dass** das hydroxymodifizierte Ammoniumssalz und das alkoxy-modifizierte Melamin oder die Polycarbonsäure in einem Molverhältnis von 1:0,2 bis 1:1, vorzugsweise etwa 1:0,5 auf das Trägermaterial aufgebracht sind.

8. Adsorbens nach einem der vorstehenden Ansprüche, **dadurch gekennzeichnet, dass** das Trägermaterial ein textiles Flächengebilde ist.

9. Adsorbens nach Anspruch 8, **dadurch gekennzeichnet, dass** das Trägermaterial natürlichen Ursprungs ist, insbesondere Baumwolle, Wolle oder Viskose.

10. Verwendung eines Adsorbens nach einem der vorstehenden Ansprüche zur Bindung von per- oder polyfluorierten organischen Verbindungen, insbesondere perfluorierten organischen Carbonsäuren und Sulfonsäuren aus wässrigen Medien, insbesondere Abwässern.
